(19) Europäisches Patentamt

European Patent Office

Office européen des brevets

(11) **EP 1 724 933 A1**

(12) **EUROPEAN PATENT APPLICATION**

(43) Date of publication:
**22.11.2006 Bulletin 2006/47**

(51) Int Cl.:
*H03M 13/29* (2006.01)    *H04K 1/00* (2006.01)
*H03M 13/31* (2006.01)

(21) Application number: **05011011.3**

(22) Date of filing: **20.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **NTT DoCoMo, Inc.**
**Tokyo (JP)**

(72) Inventors:
 • **Dütsch, Nicolas**
  **80809 München (DE)**

 • **Hagenauer, Joachim**
  **82229 Seefeld (DE)**
 • **Suda, Hirohito**
  **81373 München (DE)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

Remarks:
Amended claims in accordance with Rule 86 (2) EPC.

(54) **Communication apparatus and method for providing encrypted data**

(57) A communication apparatus (120) comprises a redundancy encoder (200) for encoding an input information signal to obtain an encoded output sequence of information units, including information of the input signal and redundant information. Furthermore, the communication apparatus (120) comprises an encrypter (202) for encrypting the encoded output sequence to obtain an encrypted output sequence of information units, the encrypter (202) comprising a sequence manipulator (204) for manipulating the encoded output sequence which includes an interleaver (306) having an interleaving rule controllable with a secret encryption key, and a puncturer (308) for applying a puncturing pattern controllable with the secret encryption key, which is only known to an intended recipient of the input information signal.

FIG. 3A

**Description**

The present invention is in the field of telecommunication and in particular, in the field of secure data transmission, joint compression (source coding) and protection (channel coding) of data in combination with encryption in order to protect the data against non-authorized access.

Shannon's separation theorem states that source coding and channel coding can be performed separately and sequentially, while maintaining optimality. Furthermore, Claude Shannon told us that encryption should be applied after source coding to ensure powerful security.

However, in real-life communications systems the conditions of the separation theorem (e.g. infinite block length) neither hold nor can be used as a good approximation. It is shown that joint source-channel coding outperforms the separated scheme when the block length of the message is limited. For these scenarios the question is where to perform the encryption.

If the encryption is performed before the joint source-channel coding the redundancy of the source block can be used to crack the encryption. On the other hand, if the encryption is carried out after the joint coding, the redundancy of the joint coding can be used to crack the encryption.

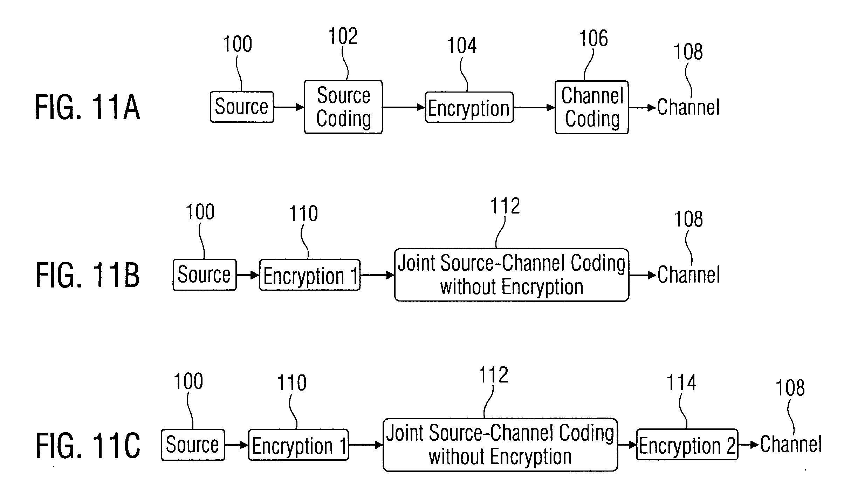

To be more specific, encryption is usually placed between source coding and channel coding and decoding is performed separately as shown, for example, in Fig. 11A. Herein, the Source 100 outputs data which is compressed in a source code unit 102 after which an encryption in an encryption unit 104 is performed. Hereafter, channel coding is performed in a channel coding unit 106 before the channel encoded data is sent visa the channel 108. It is well-known that this separation principle does not hold in real-life communication as it postulates infinite block length.

For comparison reasons two reference systems are introduced here. A first reference system 1 has a first encryption unit 110, which is fed by data originating from a source 100. The data stream output by the first encryption unit 110, is then fed into a unit in which a joint source-channel coding unit 112 without encryption is performed from which data is output to the channel 108. This first reference system 1 is shown in Fig. 11B. A second reference system 2 is shown in Fig. 11C. Contrary to the first reference system 1, the second reference system 2 has a further encryption unit 114, which is implemented such that the data output from the joint source-channel coding unit 112 is fed into this further encryption unit 114, before the data output from the further encryption unit 114 is output on the channel. These two reference systems have an advantage with respect to a transmit efficiency compared to a conventional system as for example shown in Fig. 11A. However, reference system 1 (as shown in Fig. 11B) has a disadvantage concerning security aspects due to the fact that the joint source-channel coded signal is not encrypted. Moreover, reference system 2 has a disadvantage concerning the implementation complexity as the further encryption unit 114 has to be implemented requiring further hardware space or numerical complexity.

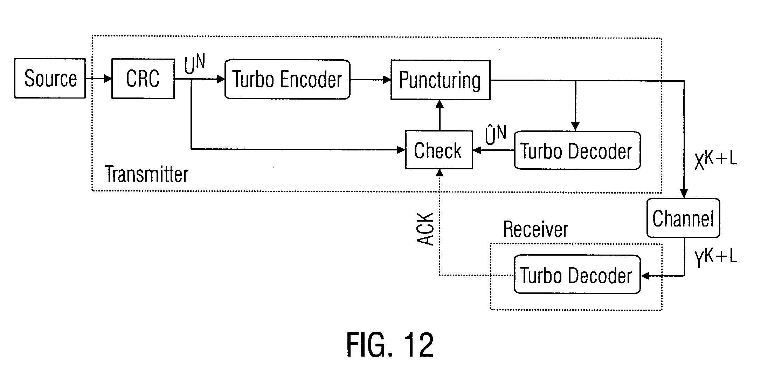

Another approach is shown in Fig. 12 (see also the paper "Combined incremental and decremental redundancy in joint source-channel coding" by N. Dütsch and J. Hagenauer, presented at the International Symposium on Information Theory and its Application, ISITA 2004, Parma, Italy, October 10-13 2004). Herein, a transmission system is disclosed in which data, originating from a source, first is provided with a CRC-check (CRC = cyclic redundancy check) wherein the resulting signal, $U^N$, is then fed into a turbo encoder. A signal output by the turbo encoder is then fed into a puncturing unit which punctures the turbo encoded signal in order to reduce redundancy and thus improve transmit efficiency. The puncture signal is then on the one hand transmitted via the channel into a turbo decoder of a receiver and, on the other hand, to a turbo decoder in the transmitter itself. An output from the turbo decoder of the transmitter is fed into a check unit which is furthermore provided with the signal output by the CRC-appending unit. The check unit can then check whether it is possible to reconstruct the signal $U^N$, that is, whether the puncturing unit has punctured sufficiently less information from the turbo-encoded signal such that a signal reconstruction can be performed on the basis of the punctured signal.

On the other hand, the turbo decoder of the receiver is coupled to the check unit of the transmitter via an acknowledged signal ACK. If information is lost during the transmit procedure via the channel (for example due to channel noise) it might be possible that the punctured signal does not include enough information such that the turbo decoder can completely recover the CRC-appendant signal $U^N$. In this case the turbo decoder of the receiver can be configured such that an acknowledge signal is not sent to the check-unit of the transmitter. In such a configuration the check unit can be configured such that it sends a signal to the puncturing unit to transmit further data to the turbo decoder of the receiver which was punctured in a previous step. Thus, it is possible that the turbo decoder of the receiver is provided with further (redundant) information in order to increase the probability that the turbo decoder of the receiver works properly and decodes the received information correctly.

However, the approach as disclosed in Fig. 12 has also the disadvantage that the transmitted signal is not secure because an encryption is not carried out or at least the redundant information included to the transmitted signal by the turbo encoder can be used by a possible attacker to crack the encryption.

Therefore, it is the object of the present invention to provide a possibility for a data transmission which provides a high security and a low implementation complexity compared to known approaches while still providing a high transmit efficiency.

This object is achieved by a communication apparatus according to one of claims 1 or 10, a method for providing an encrypted sequence of information units according to claim 9 or a method for providing an output information signal according to claim 18.

The present invention provides a communication apparatus for providing an encrypted output sequence of information units comprising:

a redundancy encoder for encoding an information signal to obtain an encoded output sequence of information units, the encoded output sequence of information units including information of the input information signal and redundant information; and

an encrypter for encrypting the encoded output sequence of information units to obtain an encrypted output sequence of information units, the encrypter comprising:

a sequence manipulator for manipulating the encoded output sequence wherein the sequence manipulator is operative to manipulate an order of information units or to eliminate selected information units in response to a secret encryption key, the secret encryption key being only known to an intended recipient of the input information signal.

Furthermore, the present invention provides a method for providing an encrypted output sequence of information units comprising the following step:

Encoding an information signal to obtain an encoded output sequence of information units, the encoded output sequence of information units including information of the input information signal and redundant information; and

Encrypting the encoded output sequence of information units to obtain an encrypted output sequence of information units, the step of encrypting comprising:

manipulating the encoded output sequence to manipulate an order of information units or to eliminate selected information units in response to a secret encryption key, the secret encryption key being only known to an intended recipient of the input information signal.

Additionally, the present invention provides a communication apparatus for providing an output sequence of information units comprising:

an decrypter for decrypting an encrypted input sequence information units to obtain an encoded input sequence of information units, the decrypter comprising:

a sequence manipulator for manipulating the encrypted input sequence wherein the sequence manipulator is operative to manipulate an order of information units or to eliminate selected information units in response to a secret decryption key, the secret decryption key being only known to an intended recipient of the input information signal and corresponding to a secret encryption key being used to form the encrypted input sequence; and a redundancy decoder for decoding the encoded input sequence of information units to obtain an output information signal, the encoded input sequence of information signal comprising information of the output information signal and redundant information.

In addition, the present invention provides a method for providing an output sequence of information units comprising:

decrypting an encrypted input sequence information units to obtain an encoded input sequence of information units, the step of decrypting comprising:

manipulating the encrypted input sequence to manipulate an order of information units or to eliminate selected information units in response to a secret decryption key, the secret decryption key being only known to an intended recipient of the input information signal and corresponding to a secret encryption key being used to form the encrypted input sequence; and

decoding the encoded input sequence of information units to obtain an output information signal, the encoded input sequence of information signal comprising information of the output information signal and redundant information.

The present invention is based on the finding that an improvement in security of data to be transmitted can be realized by applying an encrypter behind a redundancy encoder in a communication apparatus wherein the encrypter has a sequence manipulator which is operative to manipulate an order of information units or to eliminate selected information units in response to a secret encryption key. The encrypter can, for example, include an interleaver block which is filled with data according to a mapping scheme wherein the mapping scheme can be kept secret such that the mapping scheme is a secret encryption key. When the interleaver block is then read out, for example, column-wise or row-wise, the information unit sequence which was fed into the interleaver block is then encrypted "secretly" as the mapping scheme or filling scheme of the interleaver block or storage block is not known publicly but only by an intended recipient who shall be able to decrypt the message. In case a puncturing is additionally applied on such an interleaver block it can be said that if, for example, the last column is punctured, the punctured information units are spread throughout the whole information units stored in the interleaver block, as the write-in scheme of the interleaver block is secret and thus it is not predictable for a person not knowing the secret key where the punctured bits or information units will occur or will be have to written in an deinterleaver block. Furthermore, if such an interleaved and punctured sequence is transmitted, it is only possible to reconstruct the original message if the secret key, that is, in the present example, the secret filling scheme for the interleaver block, is known at the receiver.

Thus, it is an advantage of the present invention that the security for data transmission can be increased while still maintaining a transmit efficiency due to the puncturing of the redundancy encoded data. Furthermore, it is an advantage of the present invention that the implementation complexity can be kept low as only the encrypter with the sequence manipulator is provided which can, for example, be realized by providing the interleaving block and a control unit for filling the interleaving block according to the secret key.

Furthermore, it is not only possible to implement the present invention by the usage of an interleaver block. The present invention can also be implemented if just a manipulation rule for a secret key is known which would then result in a kind of "scrambling" of the data provided by the encrypter. If a receiver is also not informed about a scrambling rule according to which the input data for the encrypter was scrambled, it is also nearly impossible to reconstruct the original encoded output sequence of information units.

Furthermore, the present invention can also be implemented such that the encoded output sequence of information units is just rearranged, that is, the position of the information units in the encoded output sequence is changed according to the secret encryption key. Then, it is only possible for a receiver to decrypt a thus encrypted message if a decryption key is known which corresponds to the secret encryption key. Furthermore, it is also possible to use a puncturing scheme as a secret encryption key such that special information units of the encoded output sequence are punctured when the encrypted output sequence of information units is formed. If a receiver then has no knowledge which of the received information units are punctured, or on which positions a puncturing was carried out, it is nearly impossible for the receiver to decrypt the correct message which was transmitted. Thus, it is not always necessary to use an interleaver or a storage block and a column-wise puncturing in order to encrypt an input information signal to obtain the encrypted output sequence of information units.

Therefore, the present invention can be implemented in several ways:

a)  The encrypter can be configured such that an order of the encoded output sequence of information units is not changed wherein a secret puncturing pattern is used to encrypt the encoded output sequence of information units in order to obtain the encrypted output sequence of information units. In this embodiment the receiver must be provided with an adequate (de-)puncturing pattern in order to reconstruct the encoded output sequence of information units.

b)  The encrypter can furthermore be configured to change an order of the information units of the encoded output sequence and then use a known puncturing scheme (or no puncturing scheme) in order to encrypt the encoded output sequence to obtain the encrypted output sequence. In this embodiment a receiver must know the scheme according to which the order of the input units of the encoded output sequence has been changed in order to reconstruct the encoded output sequence.

c)  The encrypter can furthermore be configured to change the order of the information unit of the encoded output sequence as well as to apply a secret puncturing scheme in order to obtain the encrypted output sequence of information units. Thus, a receiver must have knowledge of the scheme for changing the order of the information units of the encoded output sequence as well as also the puncturing scheme which was used in the encrypter (that is the reverse puncturing scheme) must be known in the receiver in order to correctly decrypt the received message.

As shown above, the present invention provides the advantage that the security of a data transmission can be significantly increased with respect to known data transmission systems while keeping a high transmission efficiency. Furthermore, the proposed approach for increasing the security of a transmission has a moderate additional implementation complexity such that an implementation of the present invention only requires a low additional effort.

Further embodiments of the present invention are described in detail with respect to the following figures, in which:

Fig. 1 shows a block diagram of an inventive communication apparatus for providing an encrypted output sequence of information units in accordance with a first embodiment of the present invention;

Fig. 2 shows a block diagram of the inventive communication apparatus in accordance with a second embodiment of the present invention;

Fig. 3A shows a block diagram of the inventive communication apparatus according to a third embodiment of the present invention;

Fig. 3B shows a block diagram of an inventive communication apparatus for providing an output information signal according to a fourth embodiment of the present invention;

Fig. 3C shows a block diagram of a communication system in which the inventive communication apparatus for providing an encrypted output sequence of information units according to a fifth embodiment is connected with a communication apparatus for providing an output information signal in accordance with a sixth embodiment;

Fig. 3D shows a block diagram of a communication system in which the inventive communication apparatus for providing an encrypted output sequence of information units according to a sixth embodiment is connected with a communication apparatus for providing an output information signal in accordance with a seventh embodiment;

Fig. 3E shows a diagram for a scheme separating a interleaver matrix into several parts;

Fig. 4 demonstrates the functioning of the inventive communication apparatus as shown in Fig. 3C;

Fig. 5 shows a block diagram of a section of the inventive communication apparatus for providing an encrypted output sequence of information units according to the third embodiment;

Fig. 6 shows a table in which comparison results for different system concepts are demonstrated;

Fig. 7 shows two sections of a further exemplary embodiments of the inventive communication apparatus for providing an encrypted output sequence of information units;

Figs. 8A and 8B shows an exemplary division of an interleaver block according to an embodiment of the inventive communication apparatus;

Fig. 9A shows a schematic diagram for explanation how an attacker can guess a secret key;

Fig. 9B shows an example of a secret key guessed by an attacker according to the encryption example shown in Fig. 9A;

Fig. 10A shows a diagram supporting an evaluation of the probability of guessing an encryption key by an attacker which is equivalent to the secret encryption key;

Fig. 10B shows an exemplary diagram for guessing an amount of possible erasure positions for a calculation of the probability that an attacker guesses an equivalent key;

Fig. 10C shows a diagram for supporting judgment of the number of probabilities resulting in an equivalent key;

Fig. 10D shows a diagram supporting the judgment of a number of equivalent keys;

Fig. 10E      shows a diagram showing the probability that an attacker guesses an equivalent key in dependence of the entropy;

Fig. 11A      shows a block diagram of a conventional transmission system;

Fig. 11B      shows a block diagram of a first reference transmitter system having a joint source-channel coding unit;

Fig. 11C      shows a block diagram of a second reference system having a joint source-channel coding; and

Fig. 12      shows a block diagram of a known transmission system using puncturing of a turbo-encoded signal in order to increase the transmit efficiency.

Equal or equivalent elements are denoted in the following description of the Figures by equal or equivalent reference numerals.

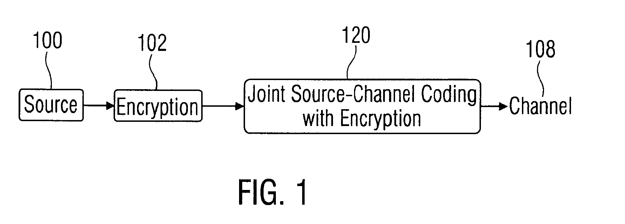

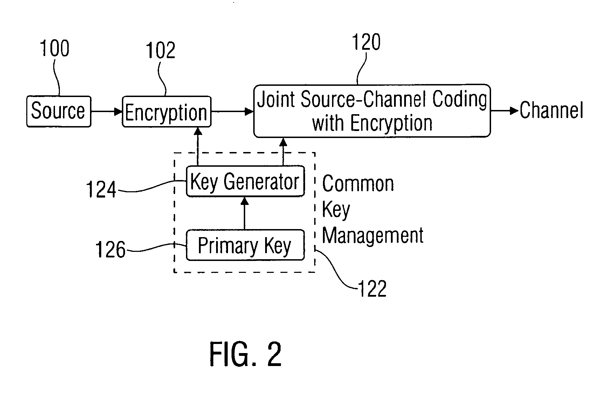

Fig. 1 shows a block diagram of a first embodiment of the inventive communication apparatus for providing an encrypted output sequence of information units. The communication apparatus comprises a source 100, an encryption unit 102 and a unit for joint source-channel coding with encryption 120 from which the data is transmitted to a channel 108. Thus, the first embodiment of the invention is aimed to perform all three tasks, namely the source coding, the channel coding and the encryption, jointly, which is carried out in the joint source-channel coding unit 120 with encryption. Furthermore, it is proposed to encrypt the data another time before the joint source-channel encryption coding and apply, for example, a common key management unit 122 as shown, for example, in Fig. 2.

Usually, encryption is placed between source coding and channel coding and the coding is performed separately. It is well-known that this separation principle does not hold in real-life communication schemes as it postulates infinite block length.

Based on the approach as disclosed in conference article "Combined incremental and decremental redundancy in joint source-channel coding" by N. Dütsch and J. Hagenauer, presented at the International Symposium on Information Theory and its Application, ISITA 2004, Parma, Italy, October 10-13 2004, a communication scheme which is based on rate adaption according to source and channel statistics, is combined with an encryption mechanism.

In the second embodiment of the present invention, as shown in Fig. 2, the following encryption strategy is used:

1.    A conventional encryption logarithm as, for example, DES, AES or RSA, in order to cipher the source sequence directly (see encryption unit 102 in Fig. 2). The power of the encryption depends on the entropy of the source and is weak for low entropy or high redundancy respectively.

2.    A second encryption is performed in the joint source-channel coding unit 120 which, for example, comprises an interleaver which is used to perform random puncturing as it will be described in more detail later. This interleaver can be designed as function of a one time pad and thus used as a secret key. Thus, an attacker has to guess the key (or an equivalent key) in order to resort the mixed bits and to be able to decode the source information successfully. Thus, the power of this encryption mechanism depends on the probability of guessing an "equivalent" key as it will also be explained later.

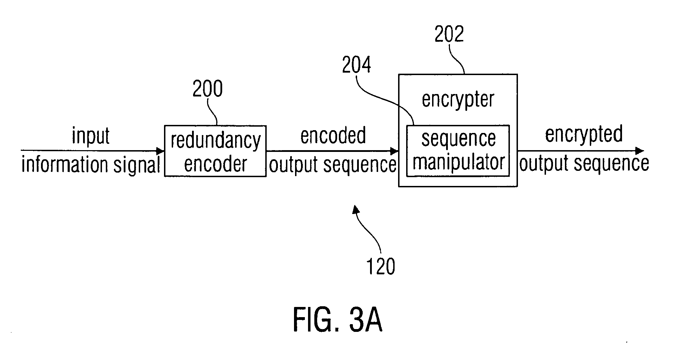

Furthermore, in the embodiment of the present invention as shown in Fig. 2, a common key management unit 1 to 2 is disclosed by which an extension of the system structure as disclosed in Fig. 1 can be realised. A key generator 124 can create keys for the first encryption unit 102 and another for this encryption in the joint source-channel coding unit 120. By doing this, it is initialized by a primary key 126 as shown in Fig. 2. Such a common key management unit 122 provides the advantage that, for example, just the one time pad has to be stored as a (secret) primary key so that the key generator itself can generate keys for the first encryption unit 102 and the encryption stage in the joint source-channel coding unit 120. Thus, it is possible to provide a highly secure encryption algorithm and, for example, a primary key 126 can be used by different encryption algorithms thus increasing the security of such encrypted messages. Furthermore, such a coupling of secret keys for different encryption units or encryption stages can easily be performed, for example, in that the key generator 124 generates a "long" secret key which can be divided in different sections wherein, for example, a first section is used as an encryption key for the encryption unit 102 whereas another part of the key generated by the key generator 124 can be used as a secret encryption key for the joint source-channel coding unit 120. As an advantage of such a procedure, especially the joint source-channel coding enclosing an encryption stage as it is performed by the joint source-channel coding unit 120 provides the advantage that the source coding, the channel coding and the encryption are performed jointly. As is already shown in the above-mentioned paper of N. Dütsch and J. Hagenauer, joint source-channel coding outperforms conventional separated transmission schemes for finite block lengths, the inventive approach furthermore integrates the encryption on the one hand before the joint source-channel coding part and furthermore uses the interleaver of the puncturing scheme as a second security instance. However, especially this second security instance shall be described now in more detail as it can be said that this second security instance is the original inventive approach in the narrower sense. To describe the inventive approach in more detail, reference is made to Fig. 3A in which a block diagram of a communication apparatus for providing an encrypted output sequence of information units is disclosed. This communication apparatus, which is denoted by the reference numeral 120, is specially designed for use in a transmitter unit. The communication apparatus comprises a redundancy encoder 200 and an encrypter 202, the encrypter 202 having a sequence manipulator 204. An input information signal is fed via an input of the redundancy encoder 200 into the redundancy encoder 200 which transforms the input information signal, respectively information units included to the input information signal into an encoded output sequence which is output via an output of the redundancy encoder 200. The encoded output sequence comprises information units having information of the input information signal and redundant information such that it can be said that the encoded output sequence is a channel-encoded signal. The encoded output sequence is then fed into an encrypter 202 having said sequence manipulator 204 which then encrypts the encoded output sequence into an encrypted output sequence. The encrypted output sequence is then output via an output of the encrypter 202. The sequence manipulator 204 is configured to manipulate an order of information unit or to eliminate selected information unit to obtain the encrypted output sequence of information units wherein the manipulation of an order of the information unit or the elimination of selected information unit is carried out in response to a secret encryption key wherein the secret encryption key is only known to an intended recipient of the input information signal. A more detailed description of the functioning of the sequence manipulator is given in a subsequent section.

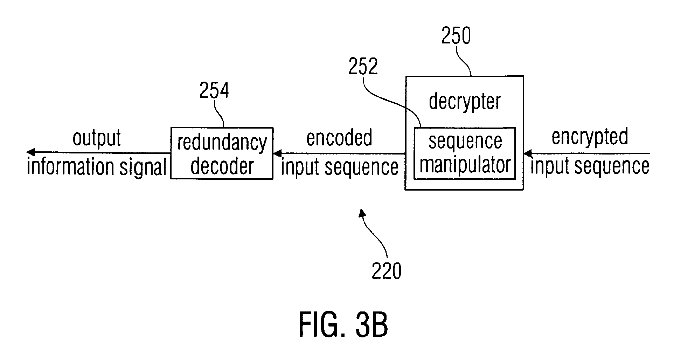

Fig. 3B shows a block diagram of a communication apparatus which can be used in a receiver. The communication apparatus which 220 is provided with an encrypter input sequence which, for example, is received via the channel. The encrypted input sequence is then fed into a decrypter 250 having a sequence manipulator 252. The decrypter 250 with the sequence manipulator 252 is configured to decrypt the encrypted input sequence in order to receive an encoded input sequence which then is provided via an output of the decrypter 250 to an input of a redundancy decoder 254. The redundancy decoder 254 is then configured to decode the encoded input sequence into an output information signal output at an output of the redundancy decoder 254. A more detailed description of the functioning of the communication apparatus 220 will also be given in a following section of this description.

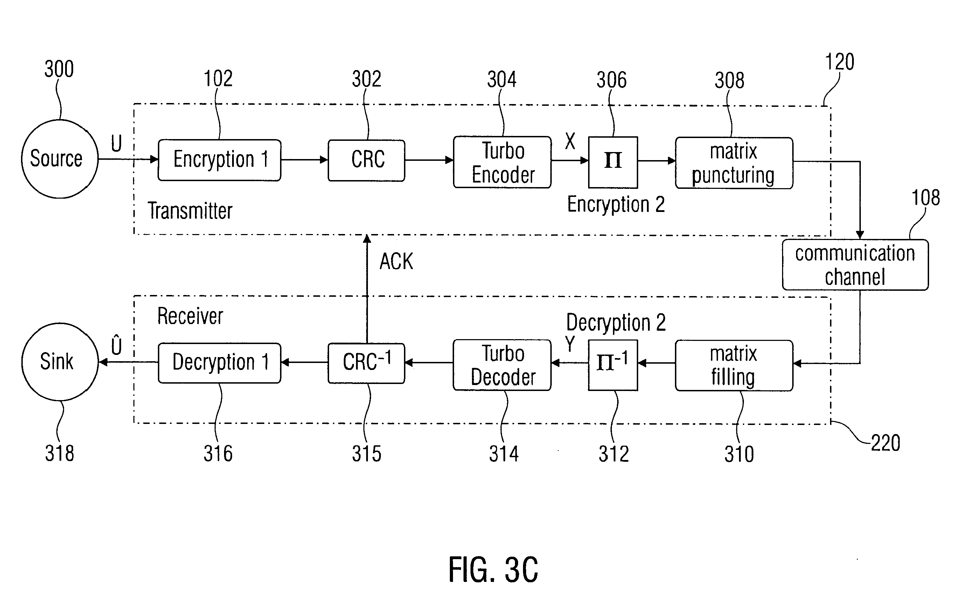

Fig. 3C shows a block diagram of a communication system having a transmitter and receiver wherein the transmitter has a communication apparatus 120 according to an embodiment of the present invention and wherein the receiver has a communication apparatus 220 according to another embodiment of the present invention. To be more specific, the transmitter has a source 300 for providing date U to a first encryption unit 102 which carries out a first encryption unit 102. The first encryption unit 302 appends provides this data to a CRC unit 302 which appends a CRC code to the encrypted data. The data appended with the CRC-data is then fed into a turbo encoder 304 which adds redundant information to the encrypted CRC-appended data in order to output encoded data X which is an encoded output sequence of information units. The encoded data X is then fed into an interleaver 306 which acts as a second encryption stage as mentioned above. The precise functioning of the interleaver 306 will be described in a subsequent section. Furthermore, the interleaver 306 outputs the interleaved data to a matrix puncturing unit 308 which performs a puncturing according to a puncturing scheme in order to reduce the redundant information included to the encrypted data in the turbo encoder 304. The data output from the matrix puncturing unit 308 is then considered to be an encrypted output sequence of information unit which can be transmitted via the communication channel 108 into a matrix filling unit 310 of the receiver. The matrix filling unit 310 is then a part of a communication apparatus 220 of the receiver, which is a further embodiment of the present invention. The matrix filling unit 310 adds data to the data received from the communication channel 108 in such a way that the puncturing carried out in the matrix puncturing unit 308 is reversed. Then, the matrix filling unit 310 outputs the data to a de-interleaver 312 which de-interleaves the data received from the matrix filling unit 310 according to a decryption key which corresponds to the encryption key for encrypting data in the interleaver 306. The de-interleaver 312 then outputs the de-interleaved data to a turbo decoder 314 which decodes the data Y in order to remove the redundant information used for channel coding purposes. The turbo decoder 314 then feeds the encoded data to a CRC unit 315 for checking the received data on correctness. If a CRC-check in the CRC-unit 315 has a positive result, an acknowledge signal ACK is output from the CRC-unit 315 and transmitted to the transmitter such that the transmitter can stop sending punctured information units to restore the transmitted signal. The functionality of the transmission system as shown in Fig. 3C is thus similar to the functionality of the system shown in Fig. 12. The CRC-checked signal then is passed to a decryption unit 316 which reverses the encryption carried out by the first encryption unit 102. The resulting data Û is then provided to a sink 318.

Expressed in other words, the source 100 provides, for example, a binary sequence U of length N-C. After encrypting this block with a conventional encryption scheme like e.g., DES, a CRC of length C is added to the encrypted message. Afterwards the data (of length N) is encoded using a parallel concatenated turbo code with recursive systematic convolutional codes. The encoded message X of length K is obtained by discarding some systematic bits (this portion is determined by the entropy of the source and handeled as a design parameter of the transmission scheme) and concatenating the parity bits. It was shown that compression should be achieved by puncturing the parity bits randomly. First, according to the embodiment of the inventive communication apparatus as shown in Fig. 3C, it is suggested to interleave the message X and fill a square matrix with these bits. Now it is possible to puncture the bits, for example, column-wise, while in fact the bits are erased randomly because of the interleaver. This systematic procedure has the advantage that the puncturing pattern does not have to be stored in order to reconstruct the source block without any errors.

In a further embodiment of the present invention, a data transmission system is disclosed in which the parity message is also interleaved and the columns (with length sqrt(K) of the square matrix are sent to the receiver segment-wise until the transmitter gets an acknowledgment signal (for example an ACK bit) from the receiver. The receiver stores the received noisy message into the appropriate column of the matrix, pads the positions where no parity bits are available at this time with a soft value of 0 (no information for this bit) and de-interleaves the complete message resulting in the message denoted by the variable Y. Now a turbo decoder is used to fill all unknown gaps. Together with the description of the conventional cipher the turbo decoder reconstructs the message Û of length N-C. The transmission of different parity columns (incremental redundancy) is performed until an integrity test (i.e. the CRC test) is passed successfully. Then the receiver sends an ACK signal (for example an ACK bit) to the transmitter and the transmitter stops sending extra parity bits. If the channel is very noisy, columns can be retransmitted and code combining is performed.

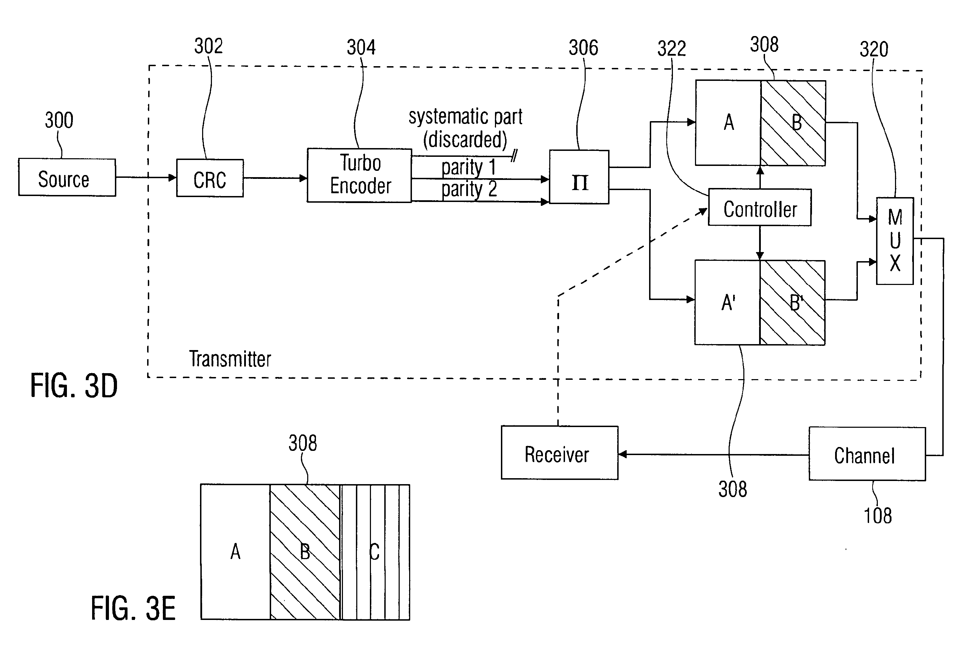

In Fig. 3D another embodiment of a communication system is shown, using further embodiments of the inventive communication apparatus. The system as shown in Fig. 3D also discloses a source 300, a CRC-appending unit 302 and a Turbo Encoder 304. The Turbo Encoder 304 provides a systematic information unit sequence, a first and a second parity information unit sequence. The systematic information unit sequence is discarded for the further processing of the signal. The first and second parity information unit sequences are fed into the interleaver 306, which provides a first and second interleaver matrix 308. The first and second interleaver matrix 308 is punctured such that a first part A and A' (schematically) comprise information and the second part B and B' (schematically) comprise redundancy information which is punctured. In a first step the parts A and A' are fed to the multiplexer MUX 320 which assembles the two parts to be transmitted via the channel 108 to the Receiver. If the receiver is not able to reconstruct the sent data, an ACK signal is not sent to the transmitter (especially the controller) via an ARQ-channel, for example. In this instance, the transmitter, especially the controller feeds the parts B and B' to the multiplexer 320 to be transmitted via the channel 108. If the receiver still is not able to reconstruct the sent data (which can be checked by the decoding of a correct CRC-code which was appended in the CRC-appending unit 302 in the transmitter), the controller can be configured to resent the parts A and A' such that a cyclic transmission of the parts A and A' and the parts B and B' results. This retransmission can also be extended to a three-fold division of the interleaver matrix 308 as shown in Fig. 3E. In such an instance, the transmission of first the "A-parts", then the "B-parts" and finally the "C-parts" are transmitted, before the controller again starts to send the A-parts. If the controller in the transmitter receives an ACK-signal from the receiver, then it stops transmission of parts of the interleaver matrix 308.

For the encryption 1 as carried out, for example, in the first encryption unit 102, it is suggested to use a standard cipher in order to encrypt the source message before turbo-encoding. On the receiver side, this operation is reversed after source-channel decoding using the iterative turbo decoder.

With respect to the second encryption stage, carried out by the combination of the interleaver 306 in the communication apparatus 120 of the transmitter and the de-interleaver 312 in the communication apparatus 220, it has to be mentioned that this encryption mechanism can be implemented by using an interleaver of the random puncturing block as the secret key. If an attacker does not know the mapping of the interleaver, he is not able to re-sort the noisy parity bits. Furthermore, if an attacker also does not know which bits are actually interleaved, it is impossible to restore the originally encrypted message as denoted by the variable X. First decoding and restoring the message correctly (should) fail. Note that indeed there are N! different mappings (for a source sequence of length N, wherein the CRC bits are regarded as part of the source message), but some mappings lead to the same result. For example, if elements with value 0 are mapped to position with elements of value 0 and elements of value 1 are mapped to elements of value 1, then an attacker has found an equivalent key. In a subsequent section the issue of judging the probability that an attacker will find an equivalent key is discussed in more detail.

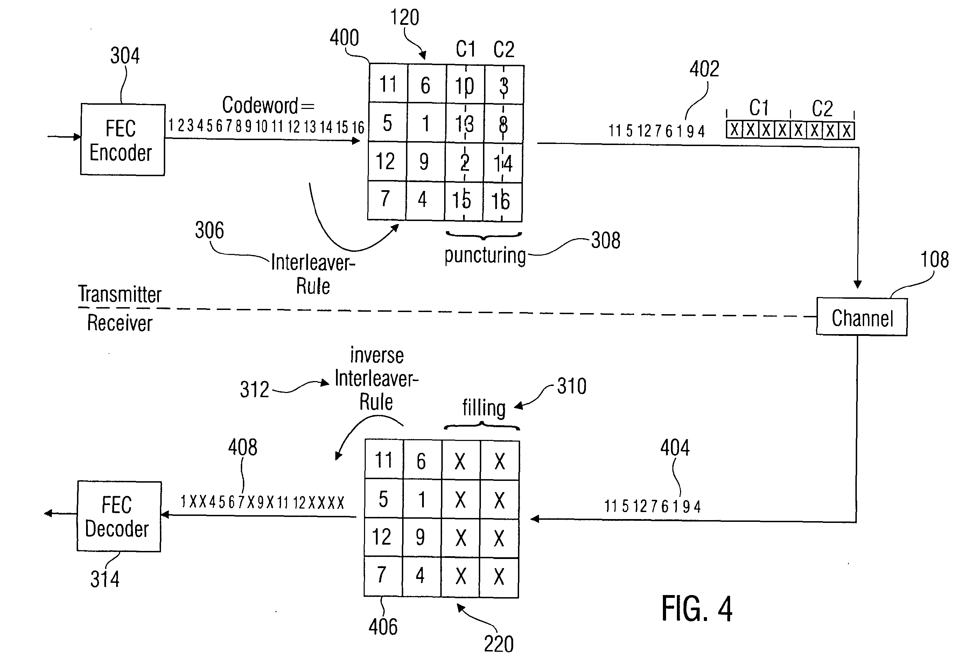

After having introduced the general concept of the inventive approach, the distinct functioning of the inventive communication apparatus is described with reference to Fig. 4. In Fig. 4 there are again shown the inventive communication apparatuses 120 of the transmitter and 220 of the receiver in the embodiments as shown in Fig. 3C. The communication apparatus 120 of the transmitter comprises an FEC encoder (FEC = forward error correction code) which can be implemented as a turbo encoder as for example shown in Fig. 3C. The FEC encoder provides, for example, a codeword of length 16 wherein the positions of the codeword are numbered in Fig. 4 by the numbers 1 to 16. The codeword in Fig. 4 can be considered to be the encoded output sequence X as disclosed in Fig. 3C. Now an interleaver 306 is applied which is operative in response to an interleaver rule to fill the codeword respectively the 16 information units of the codeword into an interleaver block of size 16, that is in an interleaver block having four rows and four columns. The scheme according to which the filling of the interleaver block will be carried out is the interleaver rule 306 which has to be kept a secret such that a recipient of the interleaved message who does not know the corresponding de-interleaver rule will not be able to restore the correct codeword. Thus, the interleaver rule for filling the interleaver block as shown in Fig. 4 can be used as a secret encryption key. Afterwards, a puncturing can be applied such as it is carried out in the matrix puncturing unit 308 as disclosed in Fig. 3C. In Fig. 4 the puncturing according to one embodiment is explained in more detail as, for example, the last two columns of C1 and C2 of the interleaver block are cancelled. Then the interleaver block can be read out, for example, column-wise, resulting in a message 400 as disclosed in Fig. 4. However, it is also possible to fill the interleaver block 400 according to a known filling scheme and read out the puncture content of the interleaver block according to a secret readout rule such that again an order of the information unit of the code word is scrambled. Additionally, it is also possible to use a secret write-in rule for filling the interleaver and a secret read-out rule for reading out the information stored in the interleaver block 400 such that an additional increase in security can be performed by the two-fold interleaver operation. Furthermore, it is also possible to provide an unknown puncturing scheme such that, for example, elements in a diagonal line of the interleaver block are punctured. If this puncturing scheme is also not known, it can be used as the secret encryption key, or, if used in combination with a secret write-in or read-out rule as an additional method for increasing the security of a thus encrypted message.

As shown in Fig. 4, the message 402 after puncturing and reading out the interleaver block 400 has a final position in which no information is included due to the puncturing. This final position, that is, the last eight information units denoted by X, were not transmitted via the channel 108 in order to provide a compression of the data to be transmitted to increase transmit efficiency. In the receiver, a received message 404 can then be received, assuming that the channel 108 was ideal. The received message 404 can then be written in to a de-interleaver block 406 according to a write-in rule for said de-interleaver block 406. The write-in rule of the de-interleaver block 406 must correspond to the read-out rule of the interleaver block 400 in order to provide a filling pattern of the de-interleaver block 406 which corresponds to the filling pattern of the interleaver block 400 before a read-out operation on the interleaver block 400. Afterwards, a filling has to be carried out such that the interleaver block 406 having also four rows and four columns, is completely filled. This means with respect to the example shown in Fig. 4, that the last columns of the de-interleaver block 406 are, for example, filled with a value of 0 in order to fill all elements of the de-interleaver block 406. Afterwards, a secret de-interleaver rule is applied which has to be the inverse interleaver rule applied to fill the interleaver 400 with the information unit of the codeword. Thus, a decrypted word 408 can be obtained which can be fed into an FEC-decoder 314 as disclosed in Fig. 4.

As already mentioned with respect to a filling or a reading-out of the interleaver 400 or a special puncturing scheme for puncturing information units in the interleaver block 400, the same secret write-in rule or read-out rule or puncturing rule can also be applied to fill or read out the de-interleaver block 406.

In an other embodiment of the communication apparatuses it is not necessary to provide a block as, for example, the interleaver block 400 and the de-interleaver block 406 use the interleaver as an encryption tool and the de-interleaver as decryption tool. Rather, if only the interleaving rule and the corresponding de-interleaving rule are known, it is possible to provide a scrambling in the encrypter such that the encrypted output sequence can be obtained without the use of an interleaver block. Equivalently, it is also possible not only to puncture column-wise but to puncture randomly wherein it is obviously necessary that the receiver has information about the puncturing scheme such that the receiver can reverse the puncturing.

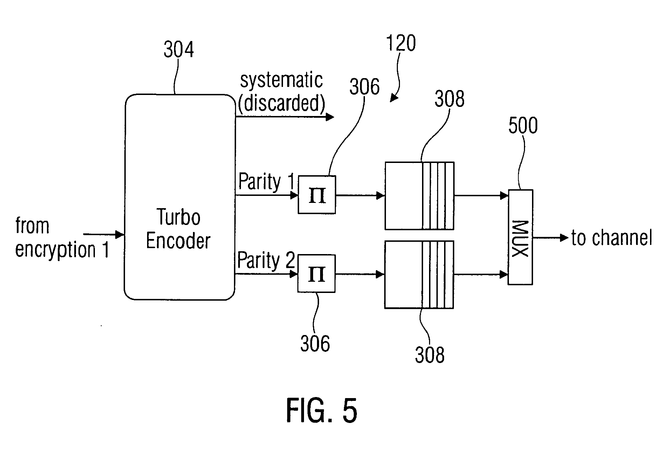

In Fig. 5 another embodiment of the inventive communication apparatus for providing an encrypted sequence of information unit is shown. Herein, the turbo encoder, which is fed by data originating from the first encryption unit, has a code rate R = ½ wherein the information (systematic) bits sequence are discarded and two redundancy (parity) bit sequences are transferred into two separate encryption paths, respectively. Each of the encryption paths has an interleaver 306 and a following matrix puncturing a unit 308 in order to provide an encrypted output sequence of information units for each of both paths. The encrypted output sequences of information units of both paths are then fed into a multiplexer 500 which forms a single stream of information units to be transmitted via the channel. The advantage of this embodiment can be seen in the fact that the security of the transmission can additionally be increased due to the encryption and the following multiplexing of the information unit in the both path. For an additional increase it is also possible to apply different encryption keys for the interleavers 306 in the different paths.

The reason why the systematic bit sequence is discarded can be seen in the following facts that, first, a reduction of the redundancy of the source information is achieved and, secondly, the security level of the transmission can be increased. The two reasons are related to each other; if redundancy can be decreased, the security of the transmission can be increased because the redundancy reduction of the transmission means reduction of information for the cracking by the attacker.

Depending on certain implementation requirements, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods when the computer program runs on a computer. In other words, the inventive methods are therefore a computer program having a program code for performing the inventive methods, when the computer program runs on a computer.

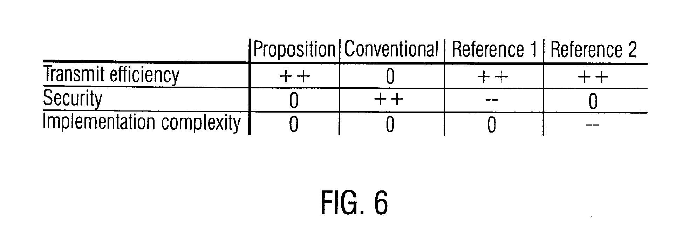

Summarizing, it has to be mentioned that the inventive approach has several advantages in view of the conventional approach as shown in Fig. 11A or the two reference systems as shown in Fig. 11B and 11C. In this context, reference is made to the table shown in Fig. 6 in which it is disclosed that the inventive approach (denoted as "proposition") has a significant advantage concerning the transmit efficiency with respect to the conventional system design. With respect to the security aspect, the inventive approach has significant advantages in view of the first reference system whereas the inventive approach has significant advantages concerning the implementation complexity in view of reference system 2.

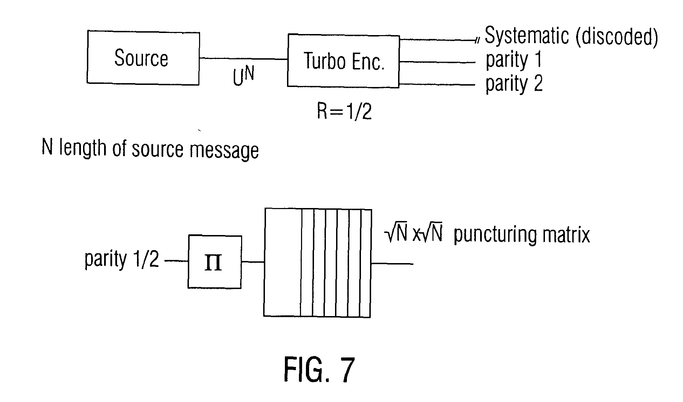

As mentioned above, it is also possible to calculate the probability than an attacker finds the secret key or an equivalent key. For such a calculation, reference is made in advance to Fig. 7 in which the basic system design is disclosed in short. In the upper division of Fig. 7 it is disclosed that the source can output data of length N to be fed into the turbo encoder with a code rate R = ½. The turbo encoder then outputs a first and second bit sequence denoted as parity 1 and parity 2 respectively, wherein the systematic bit sequence is discarded. The data of each of the output parity 1 and parity 2 is then fed into a signal path as disclosed in the lower section of Fig. 7. Each of these paths has an interleaver (denoted by the Greek letter n followed by a puncturing matrix of the size $\sqrt{N} \times \sqrt{N}$.

Encryption is vulnerable to brute force attacks if the number of bits (respectively information units) which are transmitted over the channel is low. If a perfect channel is assumed without any noise, only $H \times N$ bits have to be known at the receiver in order to reconstruct the source message perfectly in which variable H denotes the entropy of the source and N denotes the length of the source message. It has to be noted that the worst case of data transmission is reflected in the turbo compression scenario. Thus, it has to be mentioned that, in order to compensate a noisy channel, more redundant information has to be transmitted such that an attack on the encryption key is much easier. However, as the noisy channel also eliminates information transmitted from the transmitter to the receiver, it can be said that both effects compensate such that the further increase in security is not always necessary for noisy channels. However, a more detailed analysis of the probability to crack the encryption key shall be based on the above-mentioned worst case scenario.

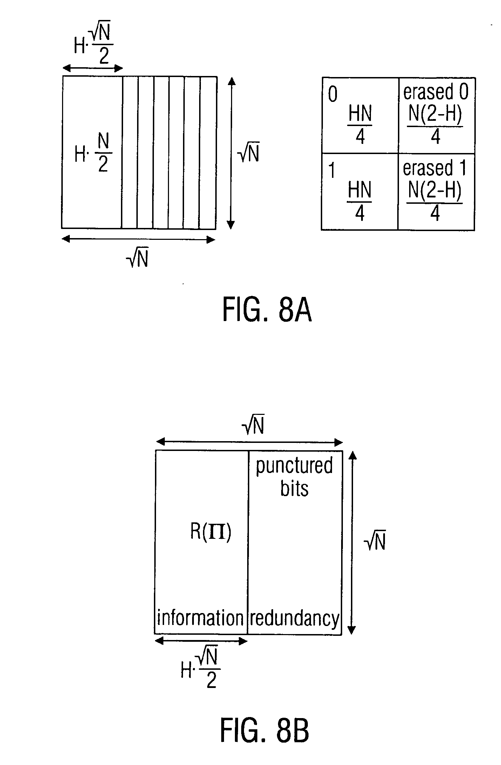

In Fig. 8A the division of the interleaver block is explained in more detail. The assumption that the probability of sending a binary value of 0 is similar to the probability of sending a binary value of 1 is similar to ½ for each of the bits in the parity1/parity2 path is justified by the fact, that the probabilities of 0 or 1 of code bits of a turbo code are almost equal. Further it can be said that according to Shannon's rule $H \times N$ bits are needed to reconstruct a compressed message perfectly. If the information is (schematically) filled in the left part of the interleaver block and the redundancy is (schematically) filled in the right part of the interleaver block (as for example shown in Fig. 8B) a puncturing can be performed such that columns are erased from the right-hand side of the interleaver block in order to reduce the redundancy. Thus, the probability of values 0 and 1 in the information comprising a part of the interleaver block can by the formula $H \cdot N/4$ wherein the value for the erased value 0 and 1 in the right-hand side part of the interleaver block can be calculated by the formula $N(2-H)/4$. First, a schematic division of the content of the interleaver block is shown on the right-hand side of Fig. 8A.

The Figs. 8A and 8B show the puncturing scheme wherein n denotes the interleaver which is a function of the one-time pad or primary key. The bits are schematically grouped together into information bits and redundant bits. The latter bits are punctured and do not have to be transmitted (if a perfect channel is assumed). Accordingly, the probability of guessing the secret or an equivalent interleaver (secret encryption key) depends on the number of bits carrying information, i.e. it depends on the entropy H of the source and the block length N and is very low for medium to long blocks. Thus, it can be said that the probability of a successful attack carried out by a brute force attack, is equal to the probability of knowing the key or an equivalent key.

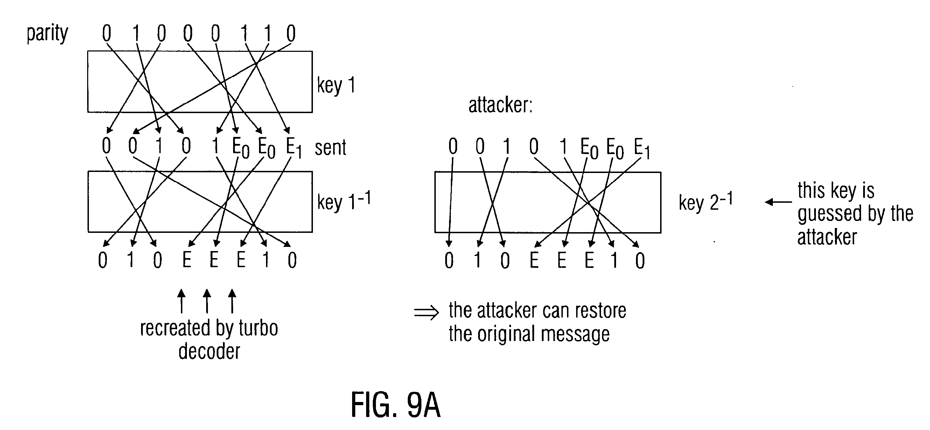

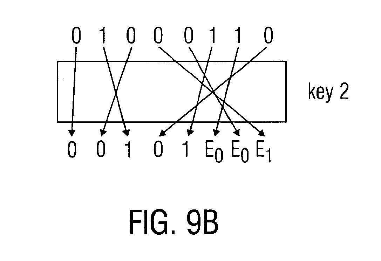

As it is more likely that an attacker will find an equivalent key than just the exact secret encryption key, reference is made on Fig. 9A and 9B is made for the calculation of the probability of finding such an equivalent key.

In Fig. 9A the finding of such an equivalent key is shown. On the left-hand side of Fig. 9A in the top position a parity bit sequence is shown which is encrypted by key 1 into a sequence which can be sent via the channel. In the receiver a decryption key, which is the inverse key 1, is applied in order to obtain a decrypted sequence which is shown at the bottom line of the left-hand side of Fig. 9A. If a puncturing is applied before sending the bit sequence (which is denoted by the variable $E_0$ and $E_1$ the decrypted sequence also contains erasures wherein the value of this erasure or erased position can be recreated by the turbo decoder. On the right-hand side of Fig. 9A it is shown how a key to, respectively an inverse key 2 can be guessed by an attacker such that the attacker can restore the original message. In order to find such an inverse of an equivalent key 2, the attacker can use the message which was sent via the channel and obtain the correct decrypted sequence unless he uses a key which is different from the secret encryption key. Therefore, it has to be noted that there are several keys which provide a correct de-mapping but which are based on completely different mapping rules. In Fig. 9B such an equivalent key is shown which results in the same encryption and decryption result than the original correct secret encryption key does. This is due to the fact that the equivalent key also maps values of 0 to values of 0 or erasures and values of 1 to values of 1 or erasures. Thus, if such a mapping has been found, an equivalent key has been found.

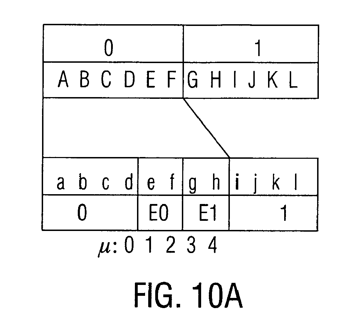

Using this knowledge about equivalent keys, it is now possible to calculate the number of equivalent keys. This can be done with reference to the diagram of Fig. 10A which describes an example for assigning twelve values on twelve positions. As shown in the upper part of Fig. 10A, values of 1 and 0 are equally distributed. If, as shown in the lower part, the erasure area is denoted by e: to h, an equivalent key results from a mapping of the information unit in the position A to F to the position a to h, which results in

$$\frac{8!}{(8-6)!} = 20160$$

mappings.

In detail, a calculation for the different number of mappings can be calculated for each value of $\mu$ wherein $\mu$ denotes the number of mappings to the erasure area (e to h). For $\mu = 0$ and $\mu = 1$ an insufficient number of "small" letters for position A to F results. For $\mu = 0$ or 1, any two letters of {e, f, g, h} and all letters of {a, b, c, d} are assigned to positions A to F.

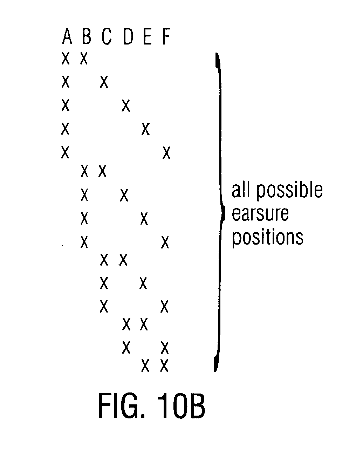

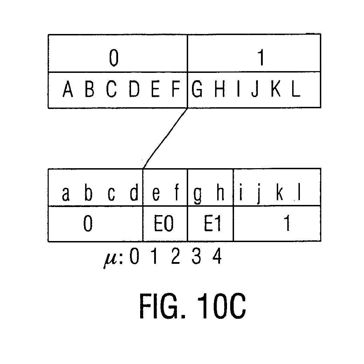

Thus, a number of mappings can be calculated according to the diagram below wherein the last term of the left-hand side denotes all possible erasure positions as disclosed, for example, in Fig. 10B. Equivalently, the number of equal mappings for $\mu = 3$ and $\mu = 4$ can be calculated according to the equations for $\mu = 3$ and $\mu = 4$.

Thus, a total of 20160 mappings results for the above-mentioned assignment.

Additionally, a mapping according to Fig. 10C also has taken into consideration whereas now the value of 1 can be mapped from position G to L onto positions e to 1. In this situation, for $\mu = 2$ an assignment of six remaining "small" letters to positions G to L is considered, resulting in 4320·6! = 3110400 mapping wherein

$$\binom{6}{2} \frac{4!}{(4-4)!} \underbrace{\frac{2!}{(2-2)!}}_{\substack{\text{now the erasure} \\ \text{positions are} \\ \text{set fixed}}} = 6!$$

$$
\begin{array}{cccccc}
A & B & C & D & E & F \\
\end{array}
$$

$$\boxed{4 \cdot 3 \cdot 2 \cdot 1} \quad \boxed{4 \cdot 3}$$

$$\{a,\, b,\, c,\, d\} \qquad \{e,\, f,\, g,\, h\}$$

$$\downarrow \qquad\qquad \downarrow$$

$$\left.\begin{array}{l}
\mu = 2 \qquad \dfrac{4!}{(4-4)!} \qquad \dfrac{4!}{(4-2)!}\binom{6}{2} = 4320 \\[3mm]
\mu = 3 \qquad \dfrac{4!}{(4-3)!} \qquad \dfrac{4!}{(4-3)!}\binom{6}{3} = 11520 \\[3mm]
\mu = 4 \qquad \dfrac{4!}{(4-2)!} \qquad \dfrac{4!}{(4-4)!}\binom{6}{4} = 4320
\end{array}\right\} \sum 20160$$

has to be taken into account in which the last term of the right-hand side denotes the number of erasure positions which is now set fixed.

For $\mu = 3$ only 4-3 = 1 (erasure positions) and 4 positions i to 1 remain which results in an insufficient number (only 5 "small" numbers remain for 6 bit positions). In order to calculate the number of equivalent mappings, exactly half of erasure positions are linked to 0 and the other half is linked to 1.

Thus, the probability of a successful attack is equal to the probability of finding an equivalent mapping which can be calculated according to the following formula:

$$Pr(attack) = Pr(finding\ equivalent\ mapping) =$$

$$= \frac{number\ of\ equivalent\ mappings}{number\ of\ all\ mappings} =$$

$$= \frac{\binom{6}{2} \frac{4!}{(4-4)!} \frac{4!}{(4-2)!} 6!}{12!} = 0{,}0065$$

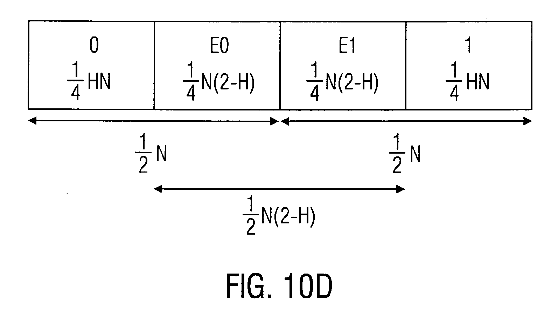

Thus, a general approach of calculating the probability of finding a equivalent key can be done using the scheme in Fig. 10D which is equivalent to lower part of Figs. 10A and 10C, now including information about the entropy and the length of the information sequence. Using this scheme, the probability of successful attack can be estimated according to the following formula:

$$Pr(attack) = \frac{\binom{\frac{1}{2}N}{\frac{1}{4}N(2-H)}\left(\frac{1}{4}HN\right)! \frac{\left(\frac{1}{2}N(2-H)\right)!}{\left(\frac{1}{4}N(2-H)\right)!}\left(\frac{1}{2}N\right)!}{N!} =$$

$$= \frac{\left(\frac{1}{2}N\right)!}{\left(\frac{1}{4}NH\right)!\left(\frac{1}{4}N(2-H)\right)!} \frac{\left(\frac{1}{4}NH\right)!\left(\frac{1}{2}N(2-H)\right)!\left(\frac{1}{2}N\right)!}{\left(\frac{1}{4}N(2-H)\right)! \quad N!}$$

$$Pr(attack) \approx \frac{\left(\left(\frac{N}{2e}\right)^{\frac{N}{2}}\sqrt{2\pi\frac{N}{2}}\right)^2 \left(\frac{N(2-H)}{2e}\right)^{\frac{N}{2}(2-H)}\sqrt{2\pi\frac{N}{2}(2-H)}}{\left(\frac{N}{e}\right)^N\sqrt{2\pi N}\left(\left(\frac{N(2-H)}{4e}\right)^{\frac{N}{4}(2-H)}\sqrt{2\pi\frac{N}{4}(2-H)}\right)^2} =$$

$$= \sqrt{\frac{\left(2\pi\frac{N}{2}\right)^2 2\pi\frac{N}{2}(2-H)}{2\pi N\left(2\pi\frac{N}{4}(2-H)\right)^2}} \frac{\left(\frac{N}{2e}\right)^N}{\left(\frac{N}{e}\right)^N}\frac{\left(\frac{N(2-H)}{2e}\right)^N}{\left(\frac{N(2-H)}{4e}\right)^N}\frac{\left(\frac{N(2-H)}{2e}\right)^{-\frac{NH}{2}}}{\left(\frac{N(2-H)}{4e}\right)^{-\frac{NH}{2}}} =$$

$$= \sqrt{\frac{2}{2-H}} \quad \frac{1}{2}^N \quad 2^N \quad 2^{-\frac{NH}{2}}$$

$$\Rightarrow \boxed{Pr(attack) \approx \sqrt{\frac{2}{2-H}}\ 2^{-\frac{NH}{2}}}$$

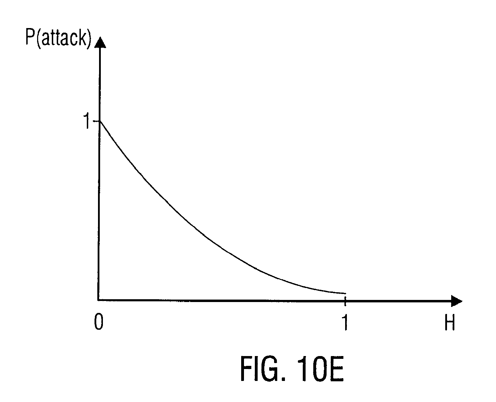

Assuming that the limit of the probability of a successful attack for H approaching 0 is 1, it is sure that any key can be guessed if the source block is completely redundant. Concerning the exponent N·H/2, it has to be mentioned that this is exactly the amount of data needed to reconstruct the source message encoded with a rate a half turbo code. Thus, an upper bound for the probability of a successful attack can be calculated according to the following formula can be clarified in a diagram as shown in Fig. 10E in which the probability of a successful attack is shown for various values for the entropy.

$$\mathrm{Pr(attack)} \approx \underbrace{\sqrt{\frac{2}{2-H}}}_{\sqrt{1}-\sqrt{2}} \; 2^{-\frac{NH}{2}} < 2 \cdot 2^{-\frac{NH}{2}} = 2 \cdot 10^{-\frac{NH}{2} \cdot \mathrm{ld(10)}}$$

$$< 2 \cdot 10^{-\frac{3}{2}NH} < 2 \cdot 10^{-NH}$$

As can be derived from the diagram in Fig. 10E, the probability of a successful attack is 1 if the entropy approach is zero, that is if the source block is completely redundant. With an increase of the entropy a decrease of the probability of a successful attack can be observed.

Thus, it can be summarized that the probability of a brute force attack is upper-bounded by $2 \cdot 2^{(-NH/2)}$. For example, it is upper-bounded by $2 \cdot 2^{-200} = 2^{-199}$ for a block length of 4000 and entropy 0,1. This probability corresponds to a brute force attack on DES (symmetric cipher) with a key length of 199 bit!

Therefore, the proposed inventive approach provides high security if the channel is very noisy. In this case many parity bits have to be transmitted and the receiver has to resort the noise soft information. With knowledge of the interleaver, which is exemplarily used, these bits or information units are sorted incorrectly and thus turbo decoding fades with high probability. In order to resort the parity bits or information units correctly, the unique interleaver has to be known. However, the probability of guessing this interleaver or interleaving rule or secret key is 1/N!.

List of abbreviations

U       source block of length N-C
X       parity block of length K
Y       noisy parity block after transmission through the channel
Û       reconstructed source block
H       entropy of the source
CRC     cyclic redundancy check

**Claims**

1. Communication apparatus (120) for providing an encrypted output sequence of information units comprising:

   a redundancy encoder (200) for encoding an information signal to obtain an encoded output sequence of information units, the encoded output sequence of information units including information of the input information signal and redundant information; and
   an encrypter (202) for encrypting the encoded output sequence of information units to obtain an encrypted output sequence of information units, the encrypter (202) comprising:

   a sequence manipulator (204) for manipulating the encoded output sequence wherein the sequence manipulator (204) is operative to manipulate an order of information units and to eliminate selected information units in response to a secret encryption key, the secret encryption key being only known to an intended recipient of the input information signal.

2. The communication apparatus (120) according to claim 1, further comprising a key generator (124) for providing the secret encryption key from a primary key (126) wherein the encrypter (202) comprises a key input for receiving the secret encryption key.

3. The communication apparatus (120) according to claim 2, wherein the redundancy encoder (200) further comprises a pre-encrypter for encrypting the input information signal with a pre-encryption key in order to obtain pre-encrypted information units, wherein the key generator (124) is configured to determine the pre-encryption key from the primary key (126).

4. The communication apparatus (120) according to one of claims 1 to 3, wherein the redundancy encoder (200) comprises a turbo encoder (304) for encoding the pre-encrypted information units in order to obtain the encoded output sequence of information units.

5. The communication apparatus (120) according to claim 4, wherein the redundancy encoder (200) is configured to provide a systematic information unit sequence, wherein the redundancy encoder is furthermore configured to discard completely the systematic information unit sequence for obtaining the encoded output sequence of information units.

6. The communication apparatus (120) according to one of claims 1 to 5, wherein the sequence manipulator (204) includes an interleaver (306) having a controllable interleaving rule, wherein the interleaver (306) is operative to apply the certain interleaving rule in response to the secret encryption key, wherein the sequence manipulator (204) includes a puncturer (308) for applying a controllable puncturing pattern and wherein the puncturer (308) is operative to apply the certain puncturing pattern in response to the secret encryption key.

7. The communication apparatus (120) according to claim 6, wherein the interleaver (306) comprises a storage block (400) having a plurality of storage cells, the storage cells being arranged in a plurality of storage rows and a plurality of storage columns, wherein the interleaver rule is such that the secret encryption key defines a scheme for writing the information units of the encoded output sequence into the storage cells of the storage block (400), wherein the scheme for writing the information units of the encoded output sequence is different from a column-wise or row-wise allocation of information units to the storage cells of the storage block (400).

8. Communication apparatus (120) according to claim 7 in combination with claim 6, wherein the puncturer (308) is configured to form the encrypted output sequence of information units by reading out the information units stored in the storage cells of the storage rows and the storage columns wherein at least the information units stored in the stored cells of one of the storage columns are neglected in forming the encrypted output sequence of information units.

9. Communication apparatus (120) according to claim 6, wherein the puncturer (308) further comprises an input for receiving an acknowledge signal (ACK), and wherein the puncturer (308) is configured to output the information units stored in the storage cells of the storage columns which are neglected when forming the encrypted output sequence of information units responsive to an acknowledge signal (ACK) received at the input for receiving an acknowledge signal.

10. Method for providing an encrypted output sequence of information units comprising the following step:

Encoding an information signal to obtain an encoded output sequence of information units, the encoded output sequence of information units including information of the input information signal and redundant information; and Encrypting the encoded output sequence of information units to obtain an encrypted output sequence of information units, the step of encrypting comprising:

manipulating the encoded output sequence to manipulate an order of information units or to eliminate selected information units in response to a secret encryption key, the secret encryption key being only known to an intended recipient of the input information signal.

11. Communication apparatus (220) for providing an output sequence of information units comprising:

an decrypter (252) for decrypting an encrypted input sequence information units to obtain an encoded input sequence of information units, the decrypter (252) comprising:

a sequence manipulator (254) for manipulating the encrypted input sequence wherein the sequence manipulator (254) is operative to manipulate an order of information units or to eliminate selected information units in response to a secret decryption key, the secret decryption key being only known to an intended recipient of the input information signal and corresponding to a secret encryption key being used to form the encrypted input sequence; and

a redundancy decoder (254) for decoding the encoded input sequence of information units to obtain an output information signal, the encoded input sequence of information signal comprising information of the output information signal and redundant information.

12. The communication apparatus (220) according to claim 11, further comprising a key generator (124) for providing the secret decryption key from a primary key (126) wherein the decrypter (250) comprises a key input for receiving the secret decryption key.

13. The communication apparatus (220) according to one of claims 11 or 12, wherein the sequence manipulator (252) includes an interleaver (312) having a controllable interleaving rule, wherein the interleaver (312) is operative to apply the certain interleaving rule in response to the secret encryption key.

14. The communication apparatus (120) according to claim 13, wherein the interleaver (312) comprises a storage block (400) having a plurality of storage cells, the storage cells being arranged in a plurality of storage rows and a plurality of storage columns, wherein the interleaver rule is such that the information units of the encrypted input sequence are written into the storage cells of the storage block (406) and the secret decryption key defines a scheme for reading out the information units stored in the storage cells of the storage block (406), wherein the scheme for reading out the information units stored in the storage block (406) is different from a column-wise or row-wise reading of information units from the storage cells of the storage block (406).

15. Communication apparatus (220) according to one of claims 11 to 14, in which the sequence manipulator (252) includes a filler (310) for applying a controllable filling pattern, wherein the filler (310) is operative to apply the certain filling pattern in response to the secret decryption key.

16. Communication apparatus (220) according to claim 15 in combination with claim 14, wherein the filler (310) is configured to fill according to the controllable filling pattern, wherein the controllable filling pattern is such that the storage cells of at least the last column of the storage block (400) are filled with a predefined value.

17. Communication apparatus (220) according to claim 16, wherein the redundancy decoder (254) is configured to use a decoding alphabet according to which the encoded input sequence of information units is decoded into the output information signal, wherein the redundancy decoder (254) is configured to output an acknowledge signal (ACK) in the case the encoded input sequence of information units cannot be decoded into the output information signal according to the decoding alphabet.

18. Communication apparatus (220) according to one of claims 11 to 17 in combination with claim 11, wherein the redundancy decoder (254) further comprises a turbo decoder for decoding the encoded output sequence of information units in order to obtain a post-decryption signal and wherein the redundancy decoder further comprises a post-decrypter for decrypting the post-decryption signal with a post-decryption key in order to obtain the output information signal and the information p, wherein the key generator (124) is configured to determine the post-encryption key from the primary key (126).

19. Method for providing an output sequence of information units comprising:

decrypting an encrypted input sequence information units to obtain an encoded input sequence of information units, the step of decrypting comprising:

manipulating the encrypted input sequence to manipulate an order of information units or to eliminate selected information units in response to a secret decryption key, the secret decryption key being only known to an intended recipient of the input information signal and corresponding to a secret encryption key being used to form the encrypted input sequence; and
decoding the encoded input sequence of information units to obtain an output information signal, the encoded input sequence of information signal comprising information of the output information signal and redundant information.

20. Computer program having a program code for performing the methods in accordance with claim 10 or 19, when the program runs on a computer.

**Amended claims in accordance with Rule 86(2) EPC.**

**1.** Communication apparatus (120) for providing an encrypted output sequence of information units comprising:

an encryption unit (102) for encrypting an input signal in order to obtain an information signal;
a redundancy encoder (200) for encoding the information signal to obtain an encoded output sequence of information units, the encoded output sequence of information units including information of the input information signal and redundant information; and
an encrypter (202) for encrypting the encoded output sequence of information units to obtain an encrypted output sequence of information units, the encrypter (202) comprising:
a sequence manipulator (204) for manipulating the encoded output sequence wherein the sequence manipulator (204) is operative to manipulate an order of information units and to eliminate selected information units in response to a secret encryption key, the secret encryption key being only known to an intended recipient of the input information signal,
wherein the sequence manipulator (204) includes an interleaver (306) having an interleaver block (400), and wherein the sequence manipulator (204) includes a puncturer (308) for applying a controllable puncturing pattern and wherein the puncturer (308) is operative to apply the certain puncturing pattern in response to the secret encryption key such that the puncturer (308) is operative to apply a secret read-out rule for reading out the information stored in the interleaver block (400).

**2.** The communication apparatus (120) according to claim 1, further comprising
a key generator (124) for providing the secret encryption key from a primary key (126) wherein the encrypter (202) comprises a key input for receiving the secret encryption key.

**3.** The communication apparatus (120) according to claim 2, wherein the redundancy encoder (200) further comprises a second encrypter for encrypting the input information signal with a second encryption key in order to obtain second encrypted information units, wherein the key generator (124) is configured to determine the second encryption key from the primary key (126).

**4.** The communication apparatus (120) according to one of claims 1 to 3, wherein the redundancy encoder (200) comprises a turbo encoder (304) for encoding the second encrypted information units in order to obtain said encoded output sequence.

**5.** The communication apparatus (120) according to claim 4, wherein the redundancy encoder (200) is configured to provide a information unit sequence and two redundancy bit sequences, wherein the redundancy encoder is furthermore configured to discard completely the information unit sequence for obtaining said encoded output sequence.

**6.** The communication apparatus (120) according to one of claims 1 to 5, wherein the interleaver (306) has a controllable interleaving rule, wherein the interleaver (306) is operative to apply the certain interleaving rule in response to the secret encryption key.

**7.** The communication apparatus (120) according to claim 6, wherein the interleaver (306) comprises a storage block (400) having a plurality of storage cells, the storage cells being arranged in a plurality of storage rows and a plurality of storage columns, wherein the interleaver rule is such that the secret encryption key defines a scheme for writing the information units of the encoded output sequence into said storage cells, wherein the scheme for writing the information units of the encoded output sequence to the storage cells of the storage block (400) is different from an allocation of information units along columns or rows of the storage block (400).

**8.** Communication apparatus (120) according to claim 7 in combination with claim 6, wherein the puncturer (308) is configured to form the encrypted output sequence of information units by reading out the information units stored in the storage cells of the storage rows and the storage columns, wherein the reading out is performed along columns or rows of the storage block (400) wherein at least the information units stored in the stored cells of one of the storage columns are not used for forming the encrypted output sequence of information units.

**9.** Communication apparatus (120) according to claim 8, wherein the puncturer (308) further comprises an input for receiving an acknowledge signal (ACK), and wherein the puncturer (308) is configured to output the information units of the storage columns which are not used when forming said encrypted output sequence responsive to an acknowledge signal (ACK).

**10.** Method for providing an encrypted output sequence of information units comprising the following step:

Encrypting an input signal in order to obtain the information signal;
Encoding the information signal to obtain an encoded output sequence of information units, said encoded output sequence including information of the input information signal and redundant information; and
Encrypting the encoded output sequence of information units to obtain an encrypted output sequence of information units, the step of encrypting comprising:
manipulating the encoded output sequence to manipulate an order of information units or to eliminate selected information units in response to a secret encryption key, the secret encryption key being only known to an intended recipient of the input information signal,
wherein the step of manipulating includes a step of interleaving the encoded output sequence in an interleaver (306) having an interleaver block (400), and
wherein the step of manipulating includes a step of puncturing for applying a controllable puncturing pattern and to apply the certain puncturing pattern in response to the secret encryption key such as to apply a secret read-out rule for reading out the information stored in the interleaver block (400).

**11.** Communication apparatus (220) for providing an output sequence of information units comprising:

an decrypter (252) for decrypting an encrypted input sequence information units to obtain an encoded input sequence of information units, the decrypter (252) comprising:
a sequence manipulator (254) for manipulating the encrypted input sequence wherein the sequence manipulator (254) is operative to manipulate an order of information units or to eliminate selected information units in response to a secret decryption key, the secret decryption key being only known to an intended recipient of the input information signal and corresponding to a secret encryption key being used to form the encrypted input sequence,
wherein the sequence manipulator includes a de-interleaver having a de-interleaving block (406), and
wherein the sequence manipulator (252) includes a filler (310) for applying a controllable filling pattern, wherein the filler (310) is operative to apply the certain filling pattern in response to the secret decryption key;
a redundancy decoder (254) for decoding the encoded input sequence of information units to obtain an output information signal, said encoded input sequence comprising information of the output information signal and redundant information; and
a decryption unit (316) for decrypting the output information signal to obtain the output sequence of information units.

**12.** The communication apparatus (220) according to claim 11, further comprising
a key generator (124) for providing the secret decryption key from a primary key (126) wherein the decrypter (250) comprises a key input for receiving the secret decryption key.

**13.** The communication apparatus (220) according to one of claims 11 or 12, wherein the sequence manipulator (252) includes an de-interleaver (312) having a controllable de-interleaving rule, wherein the de-interleaver (312) is operative to apply the certain de-interleaving rule in response to the secret decryption key.

**14.** The communication apparatus (120) according to claim 13, wherein the de-interleaver (312) comprises a storage block (400) having a plurality of storage cells, the storage cells being arranged in a plurality of storage rows and a plurality of storage columns, wherein the de-interleaver rule is such that the information units of the encrypted input sequence are written into the storage cells of the storage block (406) and the secret decryption key defines a scheme for reading out the information units stored in the storage cells of the storage block (406), wherein the scheme for reading out the information units from the storage cells of the storage block (406) is different from reading of information units along columns or rows of the storage block (406).

**15.** Communication apparatus (220) according to claim 14, wherein the filler (310) is configured to fill according to the controllable filling pattern, wherein the controllable filling pattern is such that the storage cells of at least the last column of the storage block (400) are filled with a predefined value.

**16.** Communication apparatus (220) according to claim 15, wherein the redundancy decoder (254) is configured to use a decoding alphabet according to which said encoded input sequence is decoded into the output information signal, wherein the redundancy decoder (254) is configured to output an acknowledge signal (ACK) in the case said encoded input sequence cannot be decoded into the output information signal according to the decoding alphabet.

**17.** Communication apparatus (220) according to one of claims 11 to 16 in combination with claim 11, wherein the redundancy decoder (254) further comprises a turbo decoder for decoding said encoded output sequence in order to obtain an additional decryption signal and wherein the redundancy decoder further comprises a additional decrypter for decrypting the additional decryption signal with a additional decryption key in order to obtain the output information signal , wherein the key generator (124) is configured to determine the additional encryption key from the primary key (126).

**18.** Method for providing an output sequence of information units comprising:

decrypting an encrypted input sequence information units to obtain an encoded input sequence of information units, the step of decrypting comprising:
manipulating the encrypted input sequence to manipulate an order of information units or to eliminate selected information units in response to a secret decryption key, the secret decryption key being only known to an intended recipient of the input information signal and corresponding to a secret encryption key being used to form the encrypted input sequence,
wherein the step of manipulating includes a step of de-interleaving using a de-interleaver having a de-interleaving block (406), and
wherein the step of manipulating includes a step of filling using a filler (310) being configured for applying a controllable filling pattern, wherein the filler (310) is operative to apply the certain filling pattern in response to the secret decryption key;
decoding the encoded input sequence of information units to obtain an output information signal, said encoded input sequence comprising information of the output information signal and redundant information; and
Decrypting the output information signal in order to obtain the output sequence of information units.

**19.** Computer program having a program code for performing the methods in accordance with claim 10 or 18, when the program runs on a computer.

100          102                                    120                                   108

| Source | → | Encryption | → | Joint Source-Channel Coding with Encryption | → Channel |

FIG. 1

100     102             120

| Source | → | Encryption | → | Joint Source-Channel Coding with Encryption | → Channel |

124 — | Key Generator | ⦂ Common
126 — | Primary Key | ⦂ Key
⦂ Management
— 122

FIG. 2

202

204

200

input
information signal → | redundancy
encoder | → encoded
output sequence → | encrypter
sequence
manipulator | → encrypted
output sequence →

120

FIG. 3A

FIG. 3B

FIG. 3C

EP 1 724 933 A1

**FIG. 3D**

**FIG. 3E**

EP 1 724 933 A1

304

FEC
Encoder

Codeword=
1 2 3 4 5 6 7 8 9 10 11 12 13 14 15 16

400

120

C1 C2

| 11 | 6 | 10 | 3 |
| 5 | 1 | 13 | 8 |
| 12 | 9 | 2 | 14 |
| 7 | 4 | 15 | 16 |

402

C1 C2

11 5 12 7 6 1 9 4   X X X X X X X X

306

Interleaver-
Rule

308

puncturing

Transmitter
Receiver

108

Channel

inverse
Interleaver-
Rule

312

310

filling

408

1 X X 4 5 6 7 X 9 X 11 12 X X X X

| 11 | 6 | X | X |
| 5 | 1 | X | X |
| 12 | 9 | X | X |
| 7 | 4 | X | X |

404

11 5 12 7 6 1 9 4

FEC
Decoder

314

406

220

FIG. 4

FIG. 5

| | Proposition | Conventional | Reference 1 | Reference 2 |
|---|---|---|---|---|
| Transmit efficiency | + + | 0 | + + | + + |
| Security | 0 | + + | -- | 0 |
| Implementation complexity | 0 | 0 | 0 | -- |

FIG. 6

Source —$U^N$— Turbo Enc. $\longrightarrow$ Systematic (discoded)
— parity 1
— parity 2

R=1/2

N length of source message

parity 1/2 — Π — $\sqrt{N} \times \sqrt{N}$ puncturing matrix

FIG. 7

FIG. 8A

FIG. 8B

FIG. 9A

FIG. 9B

| 0 | | | | | | 1 | | | | | |
|---|---|---|---|---|---|---|---|---|---|---|---|
| A | B | C | D | E | F | G | H | I | J | K | L |

| a | b | c | d | e | f | g | h | i | j | k | l |
|---|---|---|---|---|---|---|---|---|---|---|---|
| 0 | | | | E0 | | E1 | | 1 | | | |

$\mu$: 0 1 2 3 4

## FIG. 10A

```
A B C D E F
X X
X   X
X       X
X           X
X             X
  X X
    X   X
    X     X
    X         X
      X X
      X   X
      X       X
        X X
        X   X
          X X
```

} all possible
earsure
positions

# FIG. 10B

| 0 | 1 |
|---|---|
| A B C D E F | G H I J K L |

| a b c d | e f | g h | i j k l |
|---|---|---|---|
| 0 | E0 | E1 | 1 |

$\mu$: 0 1 2 3 4

# FIG. 10C

| 0 $\frac{1}{4}$ HN | E0 $\frac{1}{4}$N(2-H) | E1 $\frac{1}{4}$N(2-H) | 1 $\frac{1}{4}$ HN |
|---|---|---|---|

$$\frac{1}{2}N \qquad\qquad \frac{1}{2}N$$

$$\frac{1}{2}N(2\text{-}H)$$

## FIG. 10D

FIG. 10E

EP 1 724 933 A1

**FIG. 11A**

Source [100] → Source Coding [102] → Encryption [104] → Channel Coding [106] → Channel [108]

**FIG. 11B**

Source [100] → Encryption 1 [110] → Joint Source-Channel Coding without Encryption [112] → Channel [108]

**FIG. 11C**

Source [100] → Encryption 1 [110] → Joint Source-Channel Coding without Encryption [112] → Encryption 2 [114] → Channel [108]

FIG. 12

European Patent
Office

**EUROPEAN SEARCH REPORT**

Application Number

EP 05 01 1011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YUAN DONG FENG; ZHANG LI JUN: "A novel scheme combining interleaving technique with cipher in Rayleigh fading channels" ICCT'98. 1998 INTERNATIONAL CONFERENCE ON COMMUNICATION TECHNOLOGY., vol. 2, 22 October 1998 (1998-10-22), pages S47-02-1-S47-02-4, XP002343372 Beijing, China ISBN: 7-80090-827-5 * the whole document * | 1-20 | H03M13/29 H04K1/00 H03M13/31 |
| Y | HAGENAUER J ET AL: "Incremental and decremental redundancy in turbo source-channel coding" CONTROL, COMMUNICATIONS AND SIGNAL PROCESSING, 2004. FIRST INTERNATIONAL SYMPOSIUM ON HAMMAMET, TUNISIA MARCH 21-24, 2004, PISCATAWAY, NJ, USA,IEEE, 21 March 2004 (2004-03-21), pages 595-598, XP010705558 ISBN: 0-7803-8379-6 * page 595 - page 597 * | 1-20 |  |
| A | DÜTSCH N, HAGENAUER J: "Combined Incremental and Decremental Redundancy in Joint Source-Channel Coding" INTERNATIONAL SYMPOSIUM ON INFORMATION THEORY AND ITS APPLICATIONS, ISITA2004, [Online] 10 October 2004 (2004-10-10), pages 1-5, XP002343373 Parma, Italy Retrieved from the Internet: URL:http://www.lnt.e-technik.tu-muenchen.de/mitarbeiter/duetsch/work/papers/duetsch-isita04.pdf> [retrieved on 2005-09-02] * page 1 - page 3, left-hand column, paragraph 2 * | 1-20 | TECHNICAL FIELDS SEARCHED (IPC) H03M H04L H04K |

-/--

The present search report has been drawn up for all claims

| Place of search | Date of completion of the search | Examiner |
|---|---|---|
| Berlin | 2 September 2005 | Carnerero Álvaro, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                     
& : member of the same patent family, corresponding
document

EPO FORM 1503 03.82 (P04C01)

**European Patent Office**

**EUROPEAN SEARCH REPORT**

Application Number

EP 05 01 1011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STIG FRODE MJOLSNES: "MODELING A GENERAL COMMUNICATION SYSTEM DOES CRYPTOGRAPHY MAKE A DIFFERENCE?" PROCEEDINGS OF THE WORLD MULTICONFERENCE ON SYSTEMICS, CYBERNETICS AND INFORMATICS, vol. 15, 14 July 2002 (2002-07-14), pages 436-440, XP008049777 Orlando, Florida, USA * the whole document * ----- | 1-20 | |
| | | | **TECHNICAL FIELDS SEARCHED (IPC)** |

The present search report has been drawn up for all claims

| Place of search | Date of completion of the search | Examiner |
|---|---|---|
| Berlin | 2 September 2005 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. DÜTSCH ; J. HAGENAUER.** Combined incremental and decremental redundancy in joint source-channel coding. *International Symposium on Information Theory and its Application, ISITA 2004,* 10 October 2004